# EUROPÄISCHE PATENTSCHRIFT

(11) **EP 0 983 573 B1**
(45) Veröffentlichungstag und Bekanntmachung des Hinweises auf die Patenterteilung: **07.08.2002**
(21) Anmeldenummer: 98914782.2
(22) Anmeldetag: 18.02.1998
(51) Int. Cl.: G06K 11/18, H01H 25/00

(54) **BEDIENVORRICHTUNG**
OPERATING DEVICE
DISPOSITIF DE MANOEUVRE

(30) Priorität: 30.05.1997 DE 19722505
(43) Veröffentlichungstag der Anmeldung: 08.03.2000
(73) Patentinhaber: ROBERT BOSCH GMBH, 70442 Stuttgart (DE)
(72) Erfinder: SCHAEFER, Thomas, D-31174 Schellerten (DE); SANDERSCHAEFER, Dirk, D-31157 Sarstedt (DE)
(74) Vertreter: Friedmann, Jürgen, Dr.-Ing.
(86) Internationale Anmeldenummer: DE9800483
(87) Internationale Veröffentlichungsnummer: WO9854670

(56) Entgegenhaltungen:
- WO-A-94/22071
- GB-A- 2 145 502
- "MOUSE WITH GEODESIC BALL" RESEARCH DISCLOSURE, Nr. 303, Juli 1989, Seite 519 XP000045833
- "KEYBOARD-INTEGRATED THUMB-BALL WITH SWITCH" IBM TECHNICAL DISCLOSURE BULLETIN, Bd. 36, Nr. 9B, 1.September 1993, Seite 189 XP000397116

## Beschreibung

### Stand der Technik

Die Erfindung geht von einer Bedienvorrichtung nach der Gattung des Hauptanspruchs aus.

Für Computer sind bereits Bedienvorrichtungen bekannt, die ein kugelförmiges Bedienelement in einer sogenannten Computermaus aufweisen. Das kugelförmige Bedienelement einer solchen Computermaus weist dabei eine im wesentlichen glatte Oberfläche auf.

Aus der Druckschrift "Mouse with Geodesic Ball", Research Disclosure no.303, July 1989, Page 519, XP 000045833 ist eine Computer-Maus mit einer geodäsischen Kugel bekannt. Die geodäsische Kugel weist n flache Seitenflächen auf, die eher diskrete Werte von der Maus liefert als kontinuierliche. Die Kugel liefert so eine taktile Rückmeldung, so daß der Benutzer Gewißheit bezüglich der Bewegung der Kugel erhält. Dieses taktile Feedback ist besonders hilfreich für eine blinde Person. Die Kugel ist also so geformt, daß bei ihrer Bewegung eine haptische Rückmeldung erfolgt.

Aus der Druckschrift IBM Technical Disclosure Bulletin, Vol. 36, Nr. 09B (XP 000397116), September 1993, Seite 189 ist eine in die Tastatur integrierte Daumenkugel mit Schalter bekannt. Diese Kugel kann durch Niederdrücken als Schalter verwendet werden.

### Vorteile der Erfindung

Die erfindungsgemäße Bedienvorrichtung mit den Merkmalen des Hauptanspruchs hat demgegenüber den Vorteil, daß der Benutzer bei der Bedienung eine gute haptische Rückmeldung erhält, indem er die Vertiefungen und das Einrasten der Rastelemente in den Vertiefungen bei manueller Betätigung des kugelförmigen Bedienelementes fühlt. Er erhält somit ein Maß für die Richtung und den Umfang einer durch seine Betätigung bewirkten Bewegung des kugelförmigen Bedienelementes, ohne daß ein Blickkontakt zum Bedienelement erforderlich ist. Durch die gute Ergonomie des kugelförmigen Bedienelementes werden außerdem Fehlbedienungen vermieden, wie sie vor allem bei als Tasten ausgebildeten Bedienvorrichtungen auftreten, die kein Gefühl für das Ausmaß einer Änderung einer durch die Bedienvorrichtung zu bedienenden Bedienfunktion vermittelt. Die Bedienvorrichtung eignet sich somit besonders zur Verwendung bei Autoradios, da für die Bedienung kein Blickkontakt des Benutzers erforderlich ist, so daß sich dieser uneingeschränkt dem Straßenverkehr widmen kann. Generell sind solche Bedienvorrichtungen vor allem auch für blinde Menschen geeignet, die in besonderer Weise auf ihren Tastsinn angewiesen sind.

Durch die in den Vertiefungen einrastbaren Rastelemente ergibt sich bei Bewegung bzw. Drehung des kugelförmigen Bedienelementes von einer Rastposition in eine andere Rastposition ein Selbstreinigungseffekt, so daß eine Verschmutzung des Bedienelements vermieden wird.

Durch die in den Unteransprüchen aufgeführten Maßnahmen sind vorteilhafte Weiterbildungen und Verbesserungen der im Hauptanspruch angegebenen Bedienvorrichtung möglich.

Vorteilhaft ist es dabei, daß mindestens eines der Rastelemente als Druckkontakt ausgebildet ist. Auf diese Weise wird die Funktionalität der Bedienvorrichtung erhöht, da sie beispielsweise sowohl zur Einstellung einer Bedienfunktion als auch zur Bestätigung dieser Einstellung oder zur Aktivierung einer anderen Bedienfunktion verwendet werden kann.

### Zeichnung

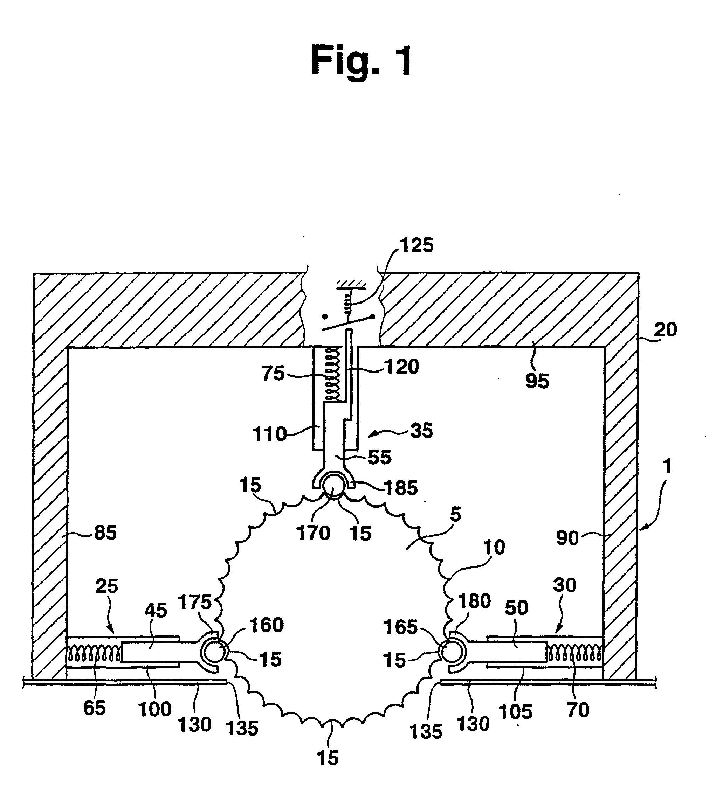

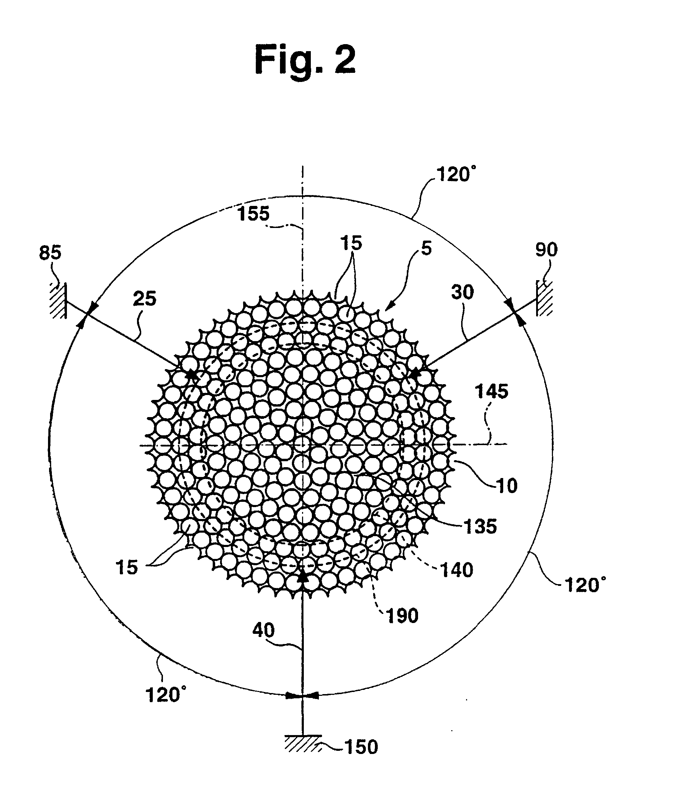

Ein Ausführungsbeispiel der Erfindung ist in der Zeichnung dargestellt und in der nachfolgenden Beschreibung näher erläutert. Es zeigen Figur 1 eine erfindungsgemäße Bedienvorrichtung in einer Aufsicht und Figur 2 eine erfindungsgemäße Bedienvorrichtung in einer Vorderansicht.

### Beschreibung des Ausführungsbeispiels

In Figur 1 kennzeichnet 1 eine Bedienvorrichtung, wie sie beispielsweise zur Einstellung der Lautstärke verschiedener Lautsprecher eines Autoradios Verwendung finden kann. Die Bedienvorrichtung 1 umfaßt ein kugelförmiges Bedienelement 5. Eine Oberfläche 10 des kugelförmigen Bedienelementes 5 ist vollständig mit Vertiefungen 15 von jeweils etwa gleicher Form eines Kugelausschnitts versehen, wie auch Figur 2 entnommen werden kann. Von zwei einander gegenüberliegenden Seiten rastet eine erste Rastkugel 160 und eine zweite Rastkugel 165 jeweils in eine Vertiefung 15 des kugelförmigen Bedienelementes 5 ein. Die erste Rastkugel 160 ist dabei in einer ersten halbkugelförmigen Halterung 175 eines ersten Rastbolzens 45 drehbar gelagert. Entsprechend ist die zweite Rastkugel 165 drehbar in einer zweiten halbkugelförmigen Halterung 180 eines zweiten Rastbolzens 50 gelagert. Dabei gehört der erste Rastbolzen 45 und die erste Rastkugel 160 zu einem ersten Rastelement 25 und der zweite Rastbolzen 50 und die zweite Rastkugel 165 zu einem zweiten Rastelement 30. Durch eine erste Feder 65 wird der erste Rastbolzen 45 gegen die entsprechende Vertiefung 15 des kugelförmigen Bedienelementes 5 gedrückt. Durch eine zweite Feder 70 wird der zweite Rastbolzen 50 gegen die entsprechende Vertiefung des kugelförmigen Bedienelementes 5 gedrückt. Die erste Feder 65 liegt dabei an ihrem dem ersten Rastbolzen 45 abgewandten Ende an einer ersten Wand 85 einer Haltevorrichtung 20 der Bedienvorrichtung 1 an. Die zweite Feder 70 liegt an ihrem dem zweiten Rastbolzen 50 abgewandten Ende an einer zweiten Wand 90 der Haltevorrichtung 20 an. Der erste Rastbolzen 45 und die erste Rastfeder 65 sind in einer ersten rohrförmigen Führung 100 geführt. Der zweite Rastbolzen 50 und die zweite Feder 70 sind in einer zweiten rohrförmigen Führung 105 geführt. Das kugelförmige Bedienelement 5 befindet sich zwischen den beiden einander gegenüberliegenden Wänden 85, 90 der Bedienvorrichtung 1. Die beiden Wände 85, 90 der Bedienvorrichtung 1 werden durch eine senkrecht zu den beiden Wänden 85, 90 stehende dritte Wand 95 der Haltevorrichtung 20 miteinander verbunden. Senkrecht zu den beiden Rastbolzen 45, 50 rastet eine dritte Rastkugel 170 in einer Vertiefung 15 des kugelförmigen Bedienelementes 5 ein. Die dritte Rastkugel 170 ist dabei in einer dritten halbkugelförmigen Halterung 185 eines dritten Rastbolzens 55 drehbar gelagert. Der dritte Rastbolzen 55 wird dabei durch eine dritte Feder 75 gegen die entsprechende Vertiefung 15 des kugelförmigen Bedienelements 5 gedrückt, wobei die dritte Feder 75 auf ihrer dem dritten Rastbolzen 55 abgewandten Seite an der dritten Wand 95 anliegt. Der dritte Rastbolzen 55 weist an seiner der dritten Feder 75 zugewandten Seite eine Verlängerung 120 auf, die in die dritte Wand 95 hineinragt. Durch die Verlängerung 120 ist ein in der dritten Wand 95 befindlicher Druckkontakt 125 betätigbar. Der dritte Rastbolzen 55, die Verlängerung 120 und die dritte Feder 75 sind in einer dritten rohrförmigen Führung 110 geführt. Die erste rohrförmige Führung 100 ist an der ersten Wand 85, die zweite rohrförmige Führung 105 ist an der zweiten Wand 90 und die dritte rohrförmige Führung 110 ist an der dritten Wand 95 befestigt. An der der dritten Wand 95 gegenüberliegenden Seite werden die erste Wand 85 und die zweite Wand 90 durch eine Bedienfront 130 miteinander verbunden, die im Bereich des kugelförmigen Bedienelementes 5 einen Durchbruch 135 aufweist, durch den ein Teil des kugelförmigen Bedienelementes 5 aus der Bedienvorrichtung 1 bzw. aus der Bedienfront 130 der Bedienvorrichtung 1 herausragt. Dieser aus der Bedienfront 130 herausragende Teil des kugelförmigen Bedienelementes 5 ist für den Benutzer zugänglich.

Das erste Rastelement 25 umfaßt die erste Rastkugel 160, den ersten Rastbolzen 45, die erste Feder 65 und die erste rohrförmige Führung 100. Das zweite Rastelement 30 umfaßt die zweite Rastkugel 165, den zweiten Rastbolzen 50, die zweite Feder 70 und die zweite rohrförmige Führung 105. Das dritte Rastelement 35 umfaßt die dritte Rastkugel 170, den dritten Rastbolzen 55, die dritte Feder 75, die Verlängerung 120 und den Druckkontakt 125. Die drei Rastelemente 25, 30, 35 befinden sich zwischen der Bedienfront 130 und der dritten Wand 95 sowie zwischen der ersten Wand 85 und der zweiten Wand 90.

Figur 2 zeigt eine Vorderansicht des kugelförmigen Bedienelementes 5, des ersten Rastelementes 25 und des zweiten Rastelementes 30. Dabei kennzeichnen gleiche Bezugszeichen jeweils gleiche Elemente. Dabei ist in Figur 2 konzentrisch zur kreisförmigen Querschnittsfläche des kugelförmigen Bedienelementes 5, jedoch mit kleinerem Durchmesser ein erster gestrichelter Kreis 140 eingezeichnet, dessen Inneres nicht durch die Bedienfront 130 verdeckt ist, das heißt den Durchbruch 135 bildet, so daß der innerhalb dieses Kreises 140 liegende Teil des kugelförmigen Bedienelementes 5 für den Benutzer sichtbar und zugänglich ist. Das erste Rastelement 25 und das zweite Rastelement 30 sind einander gegenüber auf gleicher Höhe auf einer Seite, beispielsweise oberhalb eines Äquators 145 aus der Sicht des Benutzers, das heißt aus der Perspektive gemäß Figur 2 angeordnet. Aus Gründen der Übersichtlichkeit sind das erste Rastelement 25 und das zweite Rastelement 30 in Figur 2 in Pfeilform dargestellt. Das erste Rastelement 25 und das zweite Rastelement 30 bilden dabei einen Winkel von 120°. Senkrecht zum Äquator 145 und in einem Winkel von 120° zum ersten Rastelement 25 und zum zweiten Rastelement 30 rastet ein viertes Rastelement 40 von der anderen Seite des Äquators 145, in diesem Ausführungsbeispiel von unten in einer Vertiefung 15 des kugelförmigen Bedienelementes 5 ein. Das vierte Rastelement 40 entspricht dabei in seinem Aufbau dem ersten Rastelement 25 bzw. dem zweiten Rastelement 30.

Das vierte Rastelement 40 befindet sich dabei etwa auf einer in Figur 2 gestrichelt dargestellten Linie 155, die in der Mitte zwischen dem ersten Rastelement 25 und dem zweiten Rastelement 30 senkrecht zum Äquator 145 verläuft. Das vierte Rastelement 40 ist an einer vierten Wand 150 befestigt. In Figur 2 ist ein zweiter gestrichelter Kreis 190 eingezeichnet, dessen Durchmesser größer als der Durchmesser des ersten gestrichelten Kreises 140 und kleiner als der Durchmesser des kugelförmigen Bedienelementes 5 ist. Der zweite gestrichelte Kreis 190 kennzeichnet dabei die Orte, an denen die Rastkugeln des ersten Rastelementes 25, des zweiten Rastelementes 30 und des vierten Rastelementes 40 in entsprechende Vertiefungen 15 des kugelförmigen Bedienelementes 5 einrasten können. Das erste Rastelement 25, das zweite Rastelement 30 und das vierte Rastelement 40 liegen dabei alle in derselben Ebene, die parallel zur Bedienfront 130 ist. Der zweite gestrichelte Kreis 190 kennzeichnet somit die Schnittfläche dieser Ebene mit dem kugelförmigen Bedienelement 5.

Die Bedienung des kugelförmigen Bedienelementes 5 erfolgt wie folgt:

Der Benutzer berührt mit einem oder mehreren Fingern über die Bedienfront 130 eine für ihn zugängliche Stelle des kugelförmigen Bedienelementes 5, was aufgrund der Vertiefungen 15 besonders einfach und verrutschsicher möglich ist. Der Benutzer kann auf diese Weise das kugelförmige Bedienelement 5 in beliebiger Richtung verdrehen, wobei die Rastkugeln der Rastelemente 25, 30, 35, 40 zunächst aus den entsprechenden Vertiefungen 15 gegen die Federkräfte der Federn der Rastelemente 25, 30, 35, 40 ausrasten, um dann nach Beendigung des Bedienvorgangs in neuen Vertiefungen 15 des kugelförmigen Bedienelementes 5 wieder einzurasten. Die Ausrast- und Einrastvorgänge sind nur möglich, wenn der Radius der Rastkugeln größer als der Radius der Vertiefungen 15 gewählt wird.

Für eine drehbare Lagerung des kugelförmigen Bedienelementes 5 sind mindestens drei Rastelemente erforderlich. Durch Verwendung eines vierten Rastelementes wird die drehbare Lagerung des kugelförmigen Bedienelementes 5 durch die Rastelemente in der Haltevorrichtung 20 noch zusätzlich unterstützt. Durch die Anordnung des ersten Rastelementes 25, des zweiten Rastelementes 30 und des vierten Rastelementes 40 ist das kugelförmige Bedienelement 5 vor Herausfallen gesichert, da der sich durch die Lagerpunkte dieser Rastelemente 25, 30, 40 ergebende zweite gestrichelte Kreis 190 einen geringeren Durchmesser als das kugelförmige Bedienelement 5 aufweist und der Mittelpunkt des kugelförmigen Bedienelementes 5 zwischen dem dritten Rastelement 35 und der Ebene mit dem ersten Rastelement 25, dem zweiten Rastelement 30 und dem vierten Rastelement 40 liegt.

Zusätzlich zu einer Drehbewegung kann der Benutzer das kugelförmige Bedienelement 5 auch senkrecht zur Bedienfront 130 in Richtung zur Haltevorrichtung 20 drücken, wodurch eine Betätigung des Druckkontaktes 125 durch die Verlängerung 120 des dritten Rastbolzens 55 gegen die Federkraft der dritten Feder 75 möglich wird. Um zu verhindern, daß eine Betätigung des Druckkontaktes 125 bereits bei einer einfachen Drehung des kugelförmigen Bedienelementes 5 und ein damit verbundenes entsprechendes Wegdrücken des dritten Rastbolzen 55 in Richtung zum Druckkontakt 125 erfolgt, muß der Abstand zwischen der Verlängerung 120 und dem Druckkontakt 125 genügend groß gewählt werden und/oder ein Mindestwert für die Federkonstante der dritten Feder 75 gewählt werden.

Zur Betätigung des Druckkontaktes 125 ist dann verglichen mit einer reinen Drehbewegung des kugelförmigen Bedienelementes 5 eine erhöhte Druckkraft gegen die dritte Feder 75 erforderlich.

Da die Vertiefungen 15 ganzflächig auf der Oberfläche 10 des kugelförmigen Bedienelementes 5 verteilt sind, lassen sich durch Drehen des kugelförmigen Bedienelementes 5 in beliebiger Richtung dreidimensionale Einstellungen einer Bedienfunktion realisieren. Eine haptische Rückmeldung an den Benutzer wird bei Drehung des kugelförmigen Bedienelementes 5 dadurch erreicht, daß alle vier Rastelemente 25, 30, 35, 40 synchron zur Oberflächenstruktur einrasten. Jede Rastung kann dabei elektromechanisch oder elektrooptisch registriert und als elektrisches Inkrementsignal abgenommen werden. Durch Betätigen des Druckkontaktes 125 läßt sich ebenfalls ein elektrisches Schaltsignal auf in dem Fachmann bekannter Weise erzeugen, so daß der Übersichtlichkeit halber in Figur 1 nur der Druckkontakt 125 dargestellt ist. Auch die elektromechanische oder elektrooptische Registrierung der Rastungen erfolgt in dem Fachmann bekannter Weise. So kann als elektromechanische Lösung die Verwendung von Walzen wie bei einer Computermaus vorgesehen sein, wobei je nach gewünschter Dimensionalität der Einstellmöglichkeit einer Bedienfunktion eine entsprechende Anzahl und Anordnung solcher Walzen vorgesehen werden müssen. Für die Detektion einer dreidimensionalen Einstellung sind entsprechend drei Walzen für die drei möglichen Einstellebenen bzw. Drehrichtungen des kugelförmigen Bedienelmentes 5 erforderlich. Bei zweidimensionaler Einstellungsmöglichkeit, beispielsweise durch horizontale und vertikale Drehbewegung des kugelförmigen Bedienelementes 5, jedoch ohne Drehbewegung des kugelförmigen Bedienelementes 5 um eine senkrecht zur Bedienfront 130 stehende Achse genügen auch zwei entsprechend angeordnete Walzen, die die entsprechenden Bewegungen des kugelförmigen Bedienelementes 5 detektieren. Auch eine eindimensionale Lösung mit nur einer Walze wäre denkbar.

Dabei liegen die Walzen jeweils am kugelförmigen Bedienelement 5 an, so daß sie bei Bewegung des kugelförmigen Bedienelementes 5 entsprechend gedreht werden.

Bei einer elektrooptischen Detektion einer Drehung des kugelförmigen Bedienelementes 5 ist es vorstellbar, je nach gewünschter Dimensionalität der Einstellung der entsprechenden Bedienfunktion eine entsprechende Anzahl und Anordnung von Leuchtquellen in der Bedienvorrichtung 1 vorzusehen, deren Licht auf das kugelförmige Bedienelement 5 abgestrahlt und dort je nach Auftreffort an der Oberfläche 10 oder einer Vertiefung 15 unterschiedlich reflektiert und von ebenfalls in der Bedienvorrichtung 1 angeordneten Lichtempfängern mit unterschiedlicher Intensität empfangen wird, so daß durch Vergleich der von den Lichtempfängern empfangenen Intensitäten auf die Drehrichtung und den Umfang der Drehbewegung rückgeschlossen werden kann.

Der Umfang einer Drehbewegung kann auch durch die Rastelemente 25, 30, 35, 40 selbst ermittelt werden, indem einfach die Anzahl der bei einer Drehbewegung erfolgten Rastvorgänge der einzelnen Rastelemente 25, 30, 35, 40 ermittelt wird.

Als Beispiel für die Realisierung einer zweidimensionalen Einstellung einer Bedienfunktion durch das kugelförmige Bedienelement 5 wird im folgenden die Einstellung der Lautstärke bei einem Autoradio beschrieben. So kann beispielsweise durch Drehung des kugelförmigen Bedienelementes 5 nach links die Lautstärke eines ersten Lautsprechers verringert und durch Drehung des kugelförmigen Bedienelementes 5 nach rechts die Lautstärke des ersten Lautsprechers vergrößert werden. Durch Drehung des kugelförmigen Bedienelementes 5 nach unten kann die Lautstärke eines zweiten Lautsprechers verringert, und durch Drehen des kugelförmigen Bedienelementes 5 nach oben kann die Lautstärke des zweiten Lautsprechers erhöht werden.

Die erfindungsgemäße Bedienvorrichtung 1 eignet sich ganz allgemein für die Einstellung beliebiger Bedienfunktionen bei beliebigen elektrischen Geräten, beispielsweise bei Fernsehgeräten, bei Haushaltsgeräten, wie Waschmaschinen, Spülmaschinen, oder dergleichen.

## Patentansprüche

1. Bedienvorrichtung (1) eines elektrisches Gerätes, mit einem kugelförmigen Bedienelement (5), das so geformt ist, daß bei einer Bewegung des Bedienelementes (5) eine haptische Rückmeldung erfolgt, **dadurch gekennzeichnet, daß** das kugelförmige Bedienelement (5) an einer Oberfläche (10) Vertiefungen (15) aufweist, daß an einer Haltevorrichtung (20) Rastelemente (25, 30, 35, 40) vorgesehen sind, die in den Vertiefungen (15) einrastbar sind, und daß das kugelförmige Bedienelement (5) drehbar durch die Rastelemente (25, 30, 35, 40) in der Haltevorrichtung (20) gelagert ist.

2. Bedienvorrichtung (1) nach Anspruch 1, **dadurch gekennzeichnet, daß** mindestens eines der Rastelemente (25, 30, 35, 40) einen Druckkontakt (125) umfaßt.

3. Bedienvorrichtung nach Anspruch 1 oder 2, **dadurch gekennzeichnet, daß** die Rastelemente (25, 30, 35, 40) jeweils eine Rastkugel (160, 165, 170) aufweisen, die an einem Rastbolzen (45, 50, 55) drehbar gelagert ist und in die Vertiefungen (15) einrastbar ist und daß der Radius der Rastkugel (160, 165, 170) größer als der Radius der Vertiefungen (15) ist.

4. Bedienvorrichtung nach Anspruch 1, 2 oder 3, **dadurch gekennzeichnet, daß** der jeweilige Rastbolzen (45, 50, 55) federnd mit einer Wand (85, 90, 95, 150) der Haltevorrichtung (20) verbunden ist.

5. Bedienvorrichtung nach Anspruch 2, **dadurch gekennzeichnet, daß** der Druckkontakt (125) vorzugsweise über eine Verlängerung (120) des Rastbolzens (55) des mindestens einen Rastelementes (35) betätigbar ist.

## Claims

1. Operating device (1) of an electrical device, with a spherical operating element (5), which is formed in such a way that, when there is movement of the operating element (5), tactile feedback takes place, **characterized in that** the spherical operating element (5) has depressions (15) on a surface (10), **in that** latching elements (25, 30, 35, 40) are provided on a holding device (20) and can latch into the depressions (15), and **in that** the spherical operating element (5) is mounted rotatably by the latching elements (25, 30, 35, 40) in the holding device (20).

2. Operating device (1) according to Claim 1, **characterized in that** at least one of the latching elements (25, 30, 35, 40) comprises a pressure contact (125).

3. Operating device according to Claim 1 or 2, **characterized in that** the latching elements (25, 30, 35, 40) in each case have a latching ball (160, 165, 170), which is mounted rotatably on a latching bolt (45, 50, 55) and can latch into the depressions (15) and **in that** the radius of the latching ball (160, 165, 170) is greater than the radius of the depressions (15).

4. Operating device according to Claim 1, 2 or 3, **characterized in that** the respective latching bolt (45, 50, 55) is resiliently connected to a wall (85, 90, 95, 150) of the holding device (20).

5. Operating device according to Claim 2, **characterized in that** the pressure contact (125) can preferably be actuated by means of an extension (120) of the latching bolt (55) of the at least one latching element (35).

## Revendications

1. Dispositif de manoeuvre (1) d'un appareil électrique, utilisant un élément de manoeuvre (5) en forme de bille, ayant une forme telle qu'un mouvement de l'élément de manoeuvre (5) crée en retour une information tactile,
**caractérisé en ce que**
- l'élément de manoeuvre (5) en forme de bille présente à sa surface (10) des creux (15),
- sur un dispositif de maintien (20) sont prévus des éléments d'arrêt (25, 30, 35, 40) qui peuvent s'immobiliser dans les creux (15), et
- l'élément de manoeuvre (5) peut être monté dans le dispositif de maintien (20) par l'intermédiaire des éléments d'arrêt (25, 30, 35, 40) de manière à pouvoir tourner.

2. Dispositif de manoeuvre selon la revendication 1,
**caractérisé en ce qu'**
au moins un des éléments d'arrêt (25, 30, 35, 40) comprend un contact de pression (125).

3. Dispositif de manoeuvre selon l'une des revendications 1 ou 2,
**caractérisé en ce que**
les éléments d'arrêt présentent chacun une bille d'arrêt (160, 165, 170), montée en rotation sur une cheville d'arrêt (45, 50, 55) et pouvant s'immobiliser dans les creux (15), le rayon de la bille d'arrêt (160, 165, 170) étant supérieur au rayon des creux (15).

4. Dispositif de manoeuvre selon l'une quelconque des revendications 1, 2, ou 3,
**caractérisé en ce que**
chaque cheville d'arrêt (45, 50, 55) est reliée élastiquement à une paroi (85, 90, 95, 150) du dispositif de maintien (20).

5. Dispositif de manoeuvre selon la revendication 2,
**caractérisé en ce que**
le contact de pression (125) peut avantageusement être actionné par un prolongement (120) de la cheville d'arrêt (55) d'au moins un élément d'arrêt (35).
